# EUROPEAN PATENT APPLICATION

(11) **EP 4 656 992 A1**
(43) Date of publication of application: **03.12.2025**
(21) Application number: 24179188.8
(22) Date of filing: 31.05.2024
(51) Int. Cl.: F26B 13/00, F26B 21/00

(54) **HEAT RECUPERATION IN GYPSUM BOARD DRYING PROCESS**

(71) Applicant: Gyptech AB, 352 31 Växjö (SE)
(72) Inventor: JONSSON, Oskar, 352 31 Växjö (SE); RÅHLIN, Robert, 352 31 Växjö (SE)
(74) Representative: Lind Edlund Kenamets Intellectual Property AB

(57) **Abstract**

A system for drying wet gypsum board, comprising a conveyor path for advancing wet gypsum board in a feeding direction, means for exposing the wet gypsum board to a flow of hot air, and an outlet arranged to remove a flow of exhaust gas. The system further comprises an exhaust heat exchanger for transferring heat from the exhaust gas to a flow of water, a primary evaporator for evaporating the water into input steam, a steam heater including at least one stage, each stage having a compressor and an evaporator, the multi-stage steam heater being arranged to heat the input steam to generate heated (and compressed) steam, and at least one steam/air heat exchanger connected to transfer heat from the heated steam to the flow of hot air.

The invention provides an efficient way to recuperate heat from the gypsum board drying process.

## Description

### TECHNICAL FIELD OF THE INVENTION

The present invention relates to drying of wet gypsum board, and specifically to recovering/recuperation of heat from exhaust gas to thereby reduce energy consumption.

### BACKGROUND OF THE INVENTION

When manufacturing gypsum boards, a wet plaster slurry is disposed between two paper webs. The webs are conveyed along a drying section, where heat is applied to dry the slurry. The drying process requires large amounts of energy, as significant amounts of water need to be removed from the slurry. The process also requires considerable time, in the order of 30 minutes, as the paper web restricts the amount of water that can be evaporated per time unit. Consequently, the drying section is typically quite long, e.g. tens of meters, possibly more than 100 m.

In conventional gypsum board dryers, hot air is made to flow in parallel with the conveyor (in or against the direction of travel). The process may also include sections where hot air is introduced vertically towards the wet gypsum boards (cross-flow). Gas burners (e.g. natural gas) may be used to provide the high temperatures required for the drying process. Several burners may be arranged along the conveyor to create a flow of hot air in different directions. In sections where the temperature can be slightly lower, burners may not be required. The compete drying process should provide a desired heat profile; for example, the temperature may first be ramped up to a maximum, and then allowed to gradually decrease.

In order to reduce energy consumption, various forms of energy recuperation have been proposed. For example, WO 2024/094555 discloses a gypsum drying process where one or several high temperature heat pumps are used to recuperate heat form the exhaust gas. Heat from the heat pumps is provided to the various zones of the drying process.

Despite these efforts, the drying of gypsum boards still requires large amounts of energy, and alternative ways to recuperate heat from exhaust gas are desired.

### SUMMARY OF THE INVENTION

It is an object of the present invention to provide a system and method for improved energy recuperation in a gypsum board drying process, without significantly extending the time required for the drying process.

According to one aspect of the invention, this and other objects are achieved by a system for drying wet gypsum board, comprising a conveyor path for advancing wet gypsum board in a feeding direction, means for exposing the wet gypsum board to a flow of hot air, and an outlet arranged to remove a flow of exhaust gas (containing steam). The system further comprises an exhaust heat exchanger for transferring heat from the exhaust gas to a flow of water, a primary evaporator for evaporating the water into input steam, a steam heater including at least one stage, each stage having a compressor and an evaporator, the steam heater being arranged to heat the input steam to generate heated (and compressed) steam, and at least one steam/air heat exchanger connected to transfer heat from the heated steam to the flow of hot air.

A heat exchanger combined with a steam heater including a compressor is an efficient way to recuperate heat from the gypsum board drying process.

The steam heater is preferably a multi-stage steam heater, where each stage includes a compressor and an evaporator. By using several compression stages, it is possible to obtain satisfactory recuperation of heat from the exhaust gas at a sufficient coefficient of performance (COP). The number of required stages of the steam heater is determined by the required COP and the required output temperature. The required output temperature is in turn determined by the type of drying process, in particular how long it is (a shorter process will require a higher drying temperature).

The system may further comprise a heat pump arranged between the exhaust heat exchanger and the primary evaporator, and having a primary side connected to a closed circuit of heat carrying medium heated by the exhaust heat exchanger and a secondary side connected to the flow of water. Such a heat pump may server to increase the temperature of the flow of water before it is evaporated by the primary evaporator. This will provide an input steam with higher temperature to the steam heater, thereby potentially reducing the number of required stages in the steam heater. By using a heat pump, it is possible that only one compressor stage is required in the steam heater.

The means for exposing the wet gypsum board to hot air may include a series of sequential drying zones along the conveyor path, each drying zone having a separate means for generation of hot air. This is often an advantageous approach to achieving a desired temperature curve in a gypsum board drying process.

In one embodiment, at least one the means for generation of hot air includes a heat exchanger arrange to heat incoming air and output hot air, and a fan to move hot air from the burner in a path along the wet gypsum board and back to the burner as incoming air, wherein the heat exchanger is configured to receive heated (and compressed) steam from the steam heater and to transfer heat from the heated steam to the incoming air.

In one embodiment, at least one the means for generation of hot air includes a burner configured to heat incoming air and output hot air, and a fan to move hot air from the burner in a path along the wet gypsum board and back to the burner as incoming air. The burner may be a natural gas burner, which may be advantageous if high temperatures are required in the drying process.

In some embodiments, the system further comprises an additional exhaust heat exchanger arranged to transfer heat from the exhaust gas to incoming air and provide heated supply air which is provided to the means for exposing the wet gypsum board to hot air. This additional heat exchanger may be arranged upstream or downstream the exhaust heat exchanger connected to the primary evaporator.

In some embodiments, the system further comprises a set of air supply heat exchangers, each air supply heat exchanger configured to transfer heat from steam from one of the compressors of the steam heater to the heated supply air.

### BRIEF DESCRIPTION OF THE DRAWINGS

The present invention will be described in more detail with reference to the appended drawings, showing currently preferred embodiments of the invention.
Figure 1 shows schematically a gypsum board drying process according to a first embodiment of the present invention.
Figure 2 shows schematically a gypsum board drying process according to a second embodiment of the present invention.
Figure 3 shows schematically a gypsum board drying process according to a third embodiment of the present invention.

### DETAILED DESCRIPTION OF CURRENTLY PREFERRED EMBODIMENTS

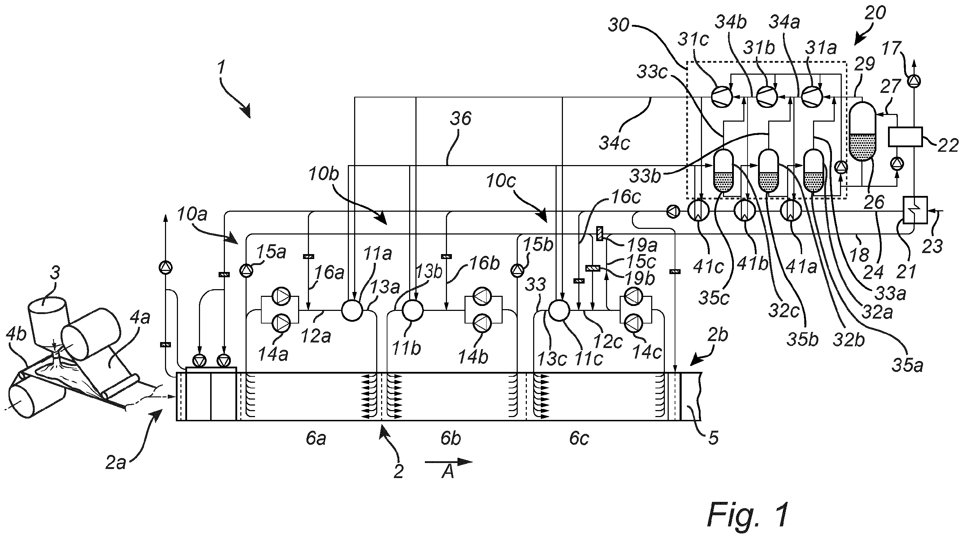

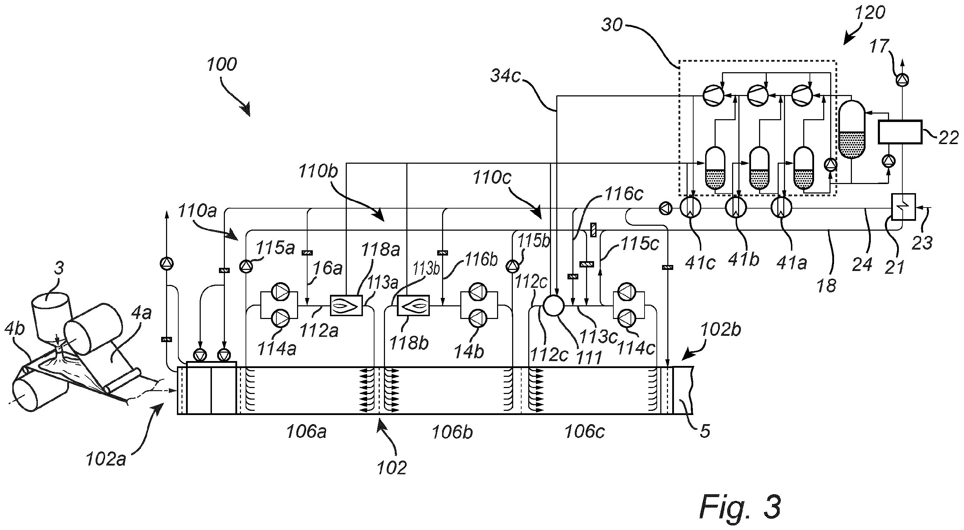

It is noted that in the following description, some standard components illustrated in figures 1 and 3, such as fans and valves, have not been mentioned or described in detail.

The gypsum board drying process 1 in figure 1 generally includes a conveyor path 2 arranged to convey wet gypsum board in a feeding direction A from a first end 2a to a second end 2b. The wet gypsum board is formed in the first end, where a plaster slurry 3 is introduced between two paper webs 4a, 4b. At the second end 2b, dried gypsum board 5 is outputted from the process.

The conveyor path can be divided into a plurality of separate zones 6a-c, together creating a temperature profile, i.e. temperature as a function of position along the path.

In the illustrated example, the first zone 6a of the process 1 includes a first drying arrangement 10a including a heat exchanger 11a, here a steam/air heat exchanger, arranged to heat incoming air 12a and generate heated air 13a. A fan 14a is arranged to circulate the heated air 13a along the conveyor path opposite the feeding direction A, and back to the heat exchanger 11a as incoming air 12a. An outlet 15a is provided to remove exhaust gas (containing steam) from the drying arrangement for heat recuperation as will be described below, and an inlet 16a is provided to receive incoming air. As is evident from figure 1, the fan 14a in zone 6a is arranged to generate a flow opposite the feeding direction A. This means that the temperature will be highest in the down-stream end of the zone 6a.

The second and third zones 6b, 6c here include heating arrangements 10b, 10c with similar elements as the first zone, i.e. steam/air heat exchangers 11b, 11c, fans 14b, 14c, outlets 15b, 15c, and inlets 16b, 16c. In zones 6b and 6c, however, the flow of heated air 13b, 13c is directed along the conveyor in the feeding direction A before being returned to the heat exchangers 11b, 11c as incoming air 12b, 12c. This means that in these zones, the temperature will be highest in the upstream end of zone 6b, 6c.

All outlets 15a-c are connected to a general exhaust outlet 17. In the present example, a valve arrangement 19a, 19b is arranged to direct the exhaust gas from outlets 15 and 15b either to the general outlet 17 (valve 19a open) or back to zone 6c as hot air (valve 19b open). The valve arrangement 19 may be configured to direct the exhaust from zones 6a and 6b (outlets 15a, 15b) to the general outlet 17 at start-up, and to zone 6c during continuous operation.

Before reaching the general outlet 17, any exhaust gas 18 will pass a heat recuperation arrangement 20, which will be described in the following. Note that the exhaust gas includes steam formed in the gypsum drying process, but possibly also flue gas, in processes where burners are used to heat the air (see below example in figure 3).

Upstream the outlet 17 is arranged a first exhaust heat exchanger 21 and a second exhaust heat exchanger 22. It is noted that the heat exchangers 21 and 22 may be arranged in any order.

The first exhaust heat exchanger 21 is configured to transfer heat from the exhaust gas 18 to incoming air 23 to form heated air 24. This heated air 24 is connected to the inlets 16a-c in the three zones 6a-c.

The second exhaust heat exchanger 22, in this case a tube condenser, is configured to transfer heat from the exhaust gas 18 to a flow of water 27, which is provided to a primary evaporator 26, e.g., a flash evaporator. The tube condenser 22 condensates steam in the exhaust gas while heating the water 27. The flash evaporator 26 then flashes the heated water 27 into low pressure input steam 29 (flash steam).

The low pressure steam 29 from the primary evaporator 26 is supplied to a steam heater, here a multi-stage mechanical vapor re-compressor, MVR 30 with three stages. Each stage comprises a compressor 31a-c and a (secondary) flash evaporator 32a-c. The compressors 31a-c are connected in series, to gradually increase the pressure (and temperature) of the steam. The number of stages in the steam heater is governed by a trade-off between required temperature and the coefficient of performance (COP).

In the illustrated example, an MVR 30 with three stages has been found appropriate, providing an output temperature of around 160°C with a COP of around 3.

In a relevant example, the drying process 1 requires a heat power of around 10000 kW. If the heat recuperation system 20 has a COP of 3, then 2/3 of the required heat power (i.e. 6666 kW) will have to be recuperated from the exhaust gas. In a case where the exhaust gas has a temperature of 100°C, a water content of 0,5 and a mass flow of 10 kg/s, the gas condenser 22 will need to reduce the temperature of the exhaust by around 50°C, such that the exhaust leaving the outlet 17 is moist air with lower water content.

The first compressor 31a is provided with the low pressure input steam 29 and flash steam 33a from the first flash evaporator 32a and provides compressed (higher pressure) steam 34a. Water from a liquid outlet 35a of the first flash evaporator may be supplied to the compressor 31a to de-superheat the steam.

In a similar manner, the second compressor 3 1b is provided with the compressed steam 34a and flash steam from the second flash evaporator 32b, and outputs compressed (higher pressure) steam 34b. Again, water from a liquid outlet 35a of the first flash evaporator 32a may be supplied to the compressor 31b. Further, water from a liquid outlet 35b of the second flash evaporator 32b is supplied as input to the first flash evaporator 32a.

In a similar manner, the third compressor 31c is provided with the compressed steam 34b and flash steam from the third flash evaporator 32c, and outputs compressed (higher pressure) steam 34c. Again, water from a liquid outlet 35a of the first flash evaporator 32a may be supplied to the compressor 31c. Further, water from a liquid outlet 35c of the third flash evaporator 32c is supplied as input to the second flash evaporator 32b.

The compressed steam 34c from the MVR 30 is used to return heat to the gypsum board drying process 1. In the illustrated example, the compressed steam 34c is connected to the heat exchangers 11a-c in the three zones 6a-c. The compressed steam 34c is condensed in the heat exchangers 11a-c and condensate (i.e. mostly liquid water) 36 from all heat exchanger 11a-c is returned and supplied to the third flash evaporator 32c.

Continuing the example, the heated water 27 formed by the gas condenser 22 may have a temperature of around 68°C, and the input steam 29 generated by the primary evaporator 26 may have a pressure of 0,22 bar(a) and a temperature of around 62°C. The three stages of the MVR 30 will increase pressure and temperature, for example to 1,4 bar(a) à 110°C (steam 34a), then to 3,3 bar à 137°C (steam 34b), and finally to 6,2 bar(a) à 160°C (steam 34c). Of course, these are only example values, and pressure and temperature in the various stages will depend on the implementation details, such as type of evaporators, compressors, etc.

The heat recuperation arrangement 20 further comprises three air supply heat exchangers 41a-c, i.e., one for each stage of the MVR 30. The air supply heat exchangers 41a-c are steam/air heat exchangers, and arranged to further heat the heated air 24 from the first heat exchanger 21. The heated air 24 is consecutively heated by one air supply heat exchanger at a time, and is eventually provided to the inlets 16a-c of the respective zones 6a-c.

The first air supply heat exchanger 41a is provided with compressed steam 34a from the first compressor 31a, and returns condensate (primarily water) 42a to the first flash evaporator 32a. The second air supply heat exchanger 41b is provided with compressed steam 34b from the second compressor 31b, and returns condensate (primarily water) 42b to the second flash evaporator 32b. Finally, the third air supply heat exchanger 41c is provided with compressed steam 34c from the third compressor 31c, and returns condensate (primarily water) 42c to the third flash evaporator 32c.

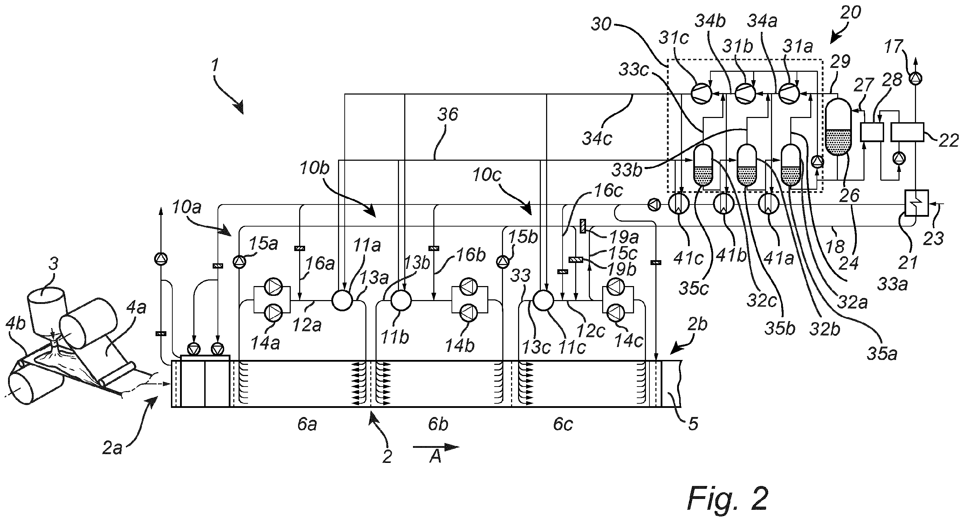

Figure 2 shows a similar drying process as the one in figure 1, and the description of this process will not be repeated.

Also, most of the heat recuperation system 20 is similar to that in figure 1. However, in figure 2 a heat pump 28 is arranged between the second heat exchanger 22 (the tube condenser) and the primary evaporator 26. In this case, the tube condenser 26 condenses steam in the exhaust gas and transfers heat to an intermediate closed circuit of heat carrying medium (e.g., water). The heat pump has a primary, low temperature, side connected to this intermediate closed circuit, and a secondary, high temperature, side connected to the flow of water 27 which is supplied to the evaporator 26. The heat pump 28 ensures a significantly higher temperature of the flow of water 27, and thereby a higher temperature of the input steam 29 which is provided to the first stage of the MVR 30.

Figure 2 depicts an MVR with three stages, just like in figure 1. However, in this case it may be possible to remove one or even two of the MVR cycles with maintained output temperature.

Turning now to figure 3, there is shown another example of a gypsum board drying process 100, provided with a heat recuperation system 120 very similar to system 20 discussed above in relation to figure 1.

Just as in figure 1, the process 100 includes a conveyor path 102 arranged to convey wet gypsum board in a feeding direction A from a first end 102a to a second end 102b. The wet gypsum board is formed in the first end, where a plaster slurry 103 is introduced between two paper webs 104a, 104b. At the second end 102b, dried gypsum board 105 is outputted from the process.

The process 100 here comprises three separate zones 106a-c.

The first zone 106a includes a first drying arrangement 110a including a burner 118a, for example a natural gas burner. The burner 118a is arranged to heat incoming air 112a and generate heated air 113a. A fan 114a is arranged to circulate the heated air 113a along the conveyor path opposite the feeding direction A, and back to the burner 118a as incoming air 112a. An outlet 115a is provided to remove exhaust gas (containing e.g., steam and flue gas) from the drying arrangement for heat recuperation as will be described below, and an inlet 116a is provided to receive incoming air. As is evident from figure 3, the fan 114a in zone 106a is arranged to generate a flow opposite the feeding direction A. This means that the temperature will be highest in the down-stream end of the zone 106a.

The second zone 106b here includes a second heating arrangement 10b with similar elements as the first heating arrangement 110a, i.e. burner 118b, a fan 114b, and outlet 115b, and an inlet 116b. In zone 106b, however, the flow of heated air 113b is directed along the conveyor in the feeding direction A before being returned to the burner 118b as incoming air 112b. This means that in zone 106b, the temperature will be highest in the upstream end of the zone.

The third zone 106c includes a heating arrangement 110c similar to the heating arrangement 10c in zone 6c in figure 1. The heating arrangement 110c thus includes a heat exchanger 111 arranged to heat incoming air 112c and generate heated air 113c. A fan 114c is arranged to circulate the heated air 113c along the conveyor path and back to the heat exchanger 111 as incoming air 112c. An outlet 115c is provided to remove exhaust gas (primarily steam) and an inlet 116c is provided to receive incoming air. Just as in zone 106b, the flow of heated air 113c is directed along the conveyor in the feeding direction A before being returned to the heat exchanger 111 as incoming air 112c. This means that also in zone 106c the temperature will be highest in the upstream end of the zone.

The various flows of exhaust gas from the outlets 115a-c are connected to one common exhaust outlet 117. Between the zones 106a-c and the outlet 117 is provided a heat recuperation arrangement 120. The heat recuperation arrangement 120 is similar to the arrangement 20 described above, and components equivalent to those in figure 1 will not be described in detail again.

The main difference with respect to the arrangement in figure 1 is that the compressed (high pressure) steam 34c from arrangement 120 is provided only to one heat exchanger, namely the heat exchanger 111 in zone 106c. A further difference is that the heated air 24 from the first heat exchanger 21, and further heated by the three consecutive air supply heat exchangers 41a-c, is provided not only to the inlets 116a-c but also to the burners 118a-b in zones 106a-b.

The person skilled in the art realizes that the present invention by no means is limited to the preferred embodiments described above. On the contrary, many modifications and variations are possible within the scope of the appended claims.

For example, the drying process may include also one or several "cross-flow" zones, which provide an airflow vertically along the path 2 instead of horizontally. A "cross flow" zone may include one or several fans arranged to each create a flow of hot air through one or several ducts extending across the path 2. Each duct is designed to direct the flow of air downwards, towards the wet gypsum board on the conveyor. In cross-flow zones, the temperature is constant, or almost constant along the path 2. Further, the MVR 30 may include additional stages, thereby providing a higher temperature (at lower COP). For example, five stages may provide a temperature of around 250°C.

## Claims

1. A system for drying wet gypsum board, comprising:
a conveyor path (2; 102) for advancing wet gypsum board in a feeding direction;
means for exposing the wet gypsum board to a flow of hot air (13a, 13b, 13c; 113c);
an outlet (17; 117) arranged to remove a flow of exhaust gas;
**characterized by**
an exhaust heat exchanger (22) for transferring heat from the exhaust gas to a flow of water (27);
a primary evaporator (26) for evaporating the water (27) into input steam (29),
a steam heater (30) including at least one stage, each stage having a compressor (31a, 31b, 31c) and an evaporator (32a, 32b, 32c), the steam heater (30) being arranged to heat the input steam (29) to generate heated steam (34c); and
at least one steam/air heat exchanger (11a, 11b, 11c; 111) connected to transfer heat from the heated steam (34c) to the flow of hot air.

2. The system according to claim 1, wherein the steam heater (30) is a multi-stage steam heater including at least two stages, each stage having a compressor (31a, 31b, 31c) and an evaporator (32a, 32b, 32c).

3. The system according to claim 2, wherein the steam heater (30) has three, four, five or six stages.

4. The system according to any one of the preceding claims, wherein the steam heater (30) is a multi-stage mechanical vapor recompressor, MVR.

5. The system according to claim any one of the preceding claims, further comprising a heat pump (28) arranged between the exhaust heat exchanger (22) and the primary evaporator (26), and having a primary side connected to a closed circuit of heat carrying medium heated by the exhaust heat exchanger (22) and a secondary side connected to the flow of water (27).

6. The system according to any one of the preceding claims, wherein the exhaust heat exchanger (22) is a tube condenser.

7. The system according to any one of the preceding claims, wherein the primary evaporator is a flash evaporator.

8. The system according to any one of the preceding claims,
wherein the means for exposing the wet gypsum board to hot air includes a series of sequential drying zones (6a-c; 106a-c) along the conveyor path (2), each drying zone having a separate means for generation of hot air.

9. The system according to claim 8, wherein at least one of said means for generation of hot air includes:
a heat exchanger (11a, 11b, 11c; 111) arrange to heat incoming air (12a, 12b, 12c; 112c) and output hot air (13a, 13b, 13c; 113c), and a fan (14a, 14b, 14c; 114c) to move hot air from the burner in a path along the wet gypsum board and back to the burner as incoming air,
wherein said heat exchanger (11a, 11b, 11c; 111) is configured to receive heated steam (34c) from the steam heater (30) and to transfer heat from the heated steam (34c) to the incoming air (12a, 12b, 12c; 113c).

10. The system according to claim 8, wherein at least one of said means for generation of hot air includes:
a burner (118a, 118b) configured to heat incoming air (112a, 112b) and output hot air (113a, 113b), and a fan (114a, 114b) to move hot air from the burner in a path along the wet gypsum board and back to the burner as incoming air.

11. The system according to any one of the preceding claims, further comprising an additional exhaust heat exchanger (21) arranged to transfer heat from the exhaust gas to incoming air (23) and provide heated supply air (24) which is provided to the means for exposing the wet gypsum board to hot air.

12. The system according to claim 11, further comprising a set of air supply heat exchangers (41a-c), each air supply heat exchanger configured to transfer heat from steam (34a-c) from one of the compressors (31a-c) to the heated supply air (24).
